# FASCICULE DE BREVET EUROPEEN

(11) **EP 3 212 998 B1**
(45) Date de publication et mention de la délivrance du brevet: **11.07.2018**
(21) Numéro de dépôt: 15781658.8
(22) Date de dépôt: 19.10.2015
(51) Int. Cl.: F22B 37/20, F22B 1/00

(54) **STRUCTURE ETANCHE POUR RÉCEPTEUR SOLAIRE EXTERNE DANS UNE TOUR D'UNE CENTRALE SOLAIRE A CONCENTRATION**
ABGEDICHTETE STRUKTUR FÜR EINEN EXTERNEN SOLAREMPFÄNGER IN EINEM TURM EINES SOLARTHERMISCHEN KRAFTWERKS
SEALED STRUCTURE FOR AN EXTERNAL SOLAR RECEIVER IN A TOWER OF A CONCENTRATED SOLAR POWER PLANT

(30) Priorité: 28.10.2014 BE 201405036
(43) Date de publication de la demande: 06.09.2017
(73) Titulaire: Cockerill Maintenance & Ingénierie S.A., 4100 Seraing (BE)
(72) Inventeur: DETHIER, Alfred, 4140 Sprimont (BE); FAIRON, Luc, 6960 Manhay (BE); MORREALE, Vincenzo, 4160 Anthisnes (BE); WINAND, Stéphane, 4031 Angleur (BE)
(74) Mandataire: Pronovem
(86) Numéro de dépôt international: PCT/EP2015/074119
(87) Numéro de publication internationale: WO 2016/066461

(56) Documents cités:
- EP-A2- 0 106 687
- US-A1- 2010 199 980
- US-A1- 2013 118 482

## Description

### Objet de l'invention

La présente invention se rapporte au domaine technique des centrales solaires thermodynamiques à concentration (en anglais CSP, pour *Concentrating Solar Power Plant*), plus particulièrement les centrales solaires à tour et plus particulièrement encore celles à récepteur solaire du type externe.

### Arrière-plan technologique et état de la technique

Dans une centrale solaire à concentration du type « à tour », le rayonnement solaire est réfléchi par une série de miroirs, dits héliostats, vers un récepteur solaire central situé sur une tour, qui transfère l'énergie du rayonnement solaire à un fluide caloporteur qui va s'échauffer et qui pourra être utilisé pour la production d'électricité.

Les héliostats sont pourvus de deux mécanismes de rotation permettant de suivre le soleil et de toujours renvoyer le flux solaire vers un point donné, quelle que soit l'heure du jour et la saison en cours.

Le récepteur solaire est installé au sommet d'une tour afin de recevoir le rayonnement solaire de tous les héliostats sans qu'un héliostat donné ne gêne la réflexion du flux produit par un héliostat voisin.

Le fluide chaud généré dans le récepteur solaire peut être de la vapeur à haute pression et haute température générée à partir d'eau d'alimentation. La vapeur peut alors être utilisée directement dans une turbine à vapeur entraînant un générateur d'électricité.

Le fluide chaud peut aussi être un mélange de sels servant de fluide calorifique pouvant être stocké au sol en grande quantité et utilisé parallèlement à la production de vapeur et la génération de puissance électrique. On peut découpler de ce fait la captation d'énergie solaire et la production d'électricité.

Le récepteur solaire installé au sommet de la tour peut être du type à cavités ou externe. Dans le premier cas, les cavités sont garnies intérieurement de panneaux de tubes, captant les rayons solaires et l'effet de la cavité est de réduire les pertes par rayonnement. Dans le cas du type externe, les panneaux de tubes captant le rayonnement solaire sont installés à l'extérieur et tout autour de la tour. Les pertes sont légèrement supérieures par rapport au système à cavités, mais il est plus facile d'y concentrer le rayonnement solaire, le flux thermique moyen étant nettement supérieur et la surface des panneaux étant fortement réduite pour une même puissance.

Dans la solution extérieure, les panneaux plans sont juxtaposés pour former un prisme droit à base polygonale régulière. Suivant les puissances installées, le prisme à base polygonale peut avoir un nombre variable de faces, de 4 à 32 par exemple.

La pratique courante selon l'état de l'art est de fixer les panneaux précités à une structure fixe. Chacun de ces panneaux peut alors se dilater librement sous l'effet de l'augmentation de température consécutive à la captation de l'énergie solaire.

Afin de permettre une maintenance aisée et d'offrir par exemple la possibilité de remplacer un seul tube d'un panneau, les tubes ne sont pas soudés entre eux mais simplement juxtaposés, avec un faible jeu entre eux. Chaque tube doit alors être maintenu individuellement afin de résister, le cas échéant, aux efforts de vent et ceux provenant d'un séisme. Mais les tubes non soudés laissent passer le vent et cela nécessite une cloison étanche à l'arrière-plan pour empêcher que le vent incident, chauffé par les tubes chauds, ne pénètre dans le corps de la tour qui est un lieu de passage pour la maintenance, l'inspection et les opérations. De plus, l'intérieur de la tour comprend des équipements électriques et électroniques sensibles qui ne peuvent généralement pas supporter une température élevée. Cette cloison étanche sera aussi appelée « casing » dans la suite de l'exposé. A titre indicatif, la température derrière la structure de support des panneaux solaires à l'intérieur de la tour peut être de 40-50°C alors que la température extérieure au niveau des panneaux et de leur structure de support directe peut être de 500-850°C.

Le document WO 2010/048578 divulgue un échangeur de chaleur à récepteur solaire assemblé en magasin ayant un agencement de surfaces de transfert de chaleur et un séparateur vertical vapeur/eau interconnecté structurellement et au niveau des fluides à celui-ci. Une structure de support verticale est prévue pour soutenir le séparateur vertical et les surfaces de transfert de chaleur. La structure de support verticale est soutenue par le bas, tandis que le séparateur vertical vapeur/eau et les surfaces de transfert de chaleur de l'échangeur de chaleur sont soutenues par le haut à partir de la structure de support verticale. La structure de support verticale fournit un support structurel et une rigidité pour l'échangeur de chaleur et un moyen par lequel l'échangeur de chaleur peut être saisi et soulevé pour être placé à un endroit souhaité.

Dans cette installation, des nervures ou poutres de renfort horizontales sont attachées aux panneaux de tubes solaires. Tous les panneaux sont soutenus par le haut et suspendus à la structure de support interne au récepteur. Chaque panneau de tubes comporte des plaques d'interconnexion. Chaque plaque est reliée via deux bielles ou barres pivotantes au niveau de leurs extrémités au moyen de goupilles à une patte qui est attachée à un support de flexion lui-même attaché via de l'acier structurel aux colonnes comprenant la structure de support verticale du récepteur. Les barres pivotantes permettent une certaine rotation des panneaux solaires et donc permettent de reprendre la dilatation thermique moyenne des panneaux supportés. Ce système donne une stabilité horizontale aux panneaux de tubes tout en permettant aux tubes une extension verticale libre et indépendante, avec réduction des tensions sur les tubes. Par contre, ce système permet une dilatation sans contrainte des tubes verticalement mais pas horizontalement.

Le document US 5,482,233 divulgue une pince de support amovible pour tubes de panneaux de récepteur solaire. La pince de support de tube est montée coulissante sur une tige de guidage, la pince comprenant un raidisseur avec une clé insérée dans une rainure de la tige de guidage et deux lobes qui enserrent la tige de guidage. Un point clé de ce concept est un assemblage et un démontage aisés sans requérir un accès au côté arrière des panneaux. Ce système de pince permet à nouveau une dilatation sans contrainte des tubes verticalement mais pas horizontalement.

Le document US 2013/0118482 A1 divulgue un récepteur solaire comprenant un ensemble central multi-faces avec des assemblages d'aile étendant à partir des coins de l'ensemble central. L'assemblage central comprend des panneaux d'absorption de chaleur à une face, tandis que les assemblages d'aile utilisent des panneaux d'absorption de chaleur à deux faces. Des structures de raidissement sont disposées à travers les faces exposées des différents panneaux d'absorption de chaleur.

Le document US 2010/0199980 A1 divulgue une chaudière pour un récepteur solaire comprenant un premier et un second panneaux récepteurx ayant chacun une pluralité de tubes de chaudière sensiblement parallèles reliant de manière fluidique un collecteur d'entrée du panneau respectif à un collecteur de sortie du panneau respectif. Les tubes de chaudière du second panneau récepteur sont sensiblement parallèles aux tubes de chaudière du premier panneau récepteur. Les premier et deuxième panneaux récepteurs sont séparés par un intervalle. Un joint de dilatation de panneau relie le premier et le second panneaux récepteurs à travers l'intervalle. Le joint de dilatation de panneau est configuré et adapté pour permettre la dilatation et la contraction thermique longitudinale des panneaux récepteurs le long des tubes de chaudière, et pour permettre la dilatation et la contraction thermique latérale des panneaux récepteurs, les uns se rapprochant et s'écartant des autres respectivement, tout en bloquant le rayonnement solaire à travers l'intervalle.

Le document EP 0 106 687 A2 divulgue un panneau de tubes comprenant des tubes de génération de vapeur et des tubes de surchauffe. Au moins deux tubes de génération de vapeur parallèles sont espacés de manière à réaliser un intervalle entre eux. Un tube de surchauffe est adjacent à chacun des deux tubes de génération de vapeur et est disposé à l'arrière de l'intervalle pour combler celui-ci et recevoir de l'énergie rayonnante par l'avant de l'intervalle, en vue d'assurer une distribution adéquate du flux de chaleur incidente entre les tubes de génération de vapeur et de surchauffe, tout en éliminant le besoin de structure de support de vibration complexe et coûteuse pour les tubes de génération de vapeur. Une plaque de support jouxte à l'arrière les tubes de surchauffe et s'étend transversalement par rapport à leur direction longitudinale. Les tubes de génération de vapeur sont supportés par des armatures connectées entre les tubes de génération de vapeur respectifs et la plaque de support respective, de manière à soutenir effectivement le tube de surchauffe entre les tubes de génération de vapeur et la plaque de support. De plus, les plaques de support des tubes de surchauffe sont connectées au travers de l'isolation par des tasseaux à des poutres de structure interne en « I ». Ces tasseaux comportent des rouleaux qui peuvent se déplacer sur les semelles des poutres en « I » sous l'effet de la dilatation longitudinales des tubes. Le mouvement des tubes sous l'effet de la dilatation se répercute donc sur la structure interne au travers de l'isolation thermique.

### Buts de l'invention

La présente invention vise à fournir une solution pour la conception d'un casing d'un récepteur externe de tour solaire afin que celui-ci puisse assurer les différentes fonctions suivantes :
- l'étanchéité au vent ainsi qu'une barrière thermique efficace,
- l'isolation entre le côté « tube », très chaud, et le côté intérieur « tour » qui lui doit être maintenu à une température acceptable pour le personnel et les équipements spéciaux, et aussi
- la réduction au maximum les pertes thermiques afin de ne pas dégrader le rendement.

Le casing doit également permettre la reprise des forces de vent ou de séisme s'exerçant sur les panneaux de tubes solaires et sur la paroi du casing proprement dite.

Le casing doit encore être conçu pour un montage des tubes facilitant leur maintenance ou leur remplacement.

Enfin, le casing doit permettre les dilatations verticale et horizontale des panneaux de tubes et être conçu pour éviter les mouvements mécaniques d'éléments de support au travers de l'isolation.

### Principaux éléments caractéristiques de l'invention

La présente invention se rapporte à un récepteur solaire externe pour tour d'une centrale solaire thermodynamique à concentration de type à tour et champ d'héliostats, ladite tour comprenant une structure interne modulaire étanche au vent, également appelée « casing » et une pluralité de panneaux récepteurs à tubes échangeurs de chaleur fixés à cette structure interne, chaque panneau comprenant une pluralité de caissons métalliques supportant les tubes échangeurs de chaleur et assemblés entre eux par un moyen d'assemblage permettant le démontage, chaque caisson étant recouvert d'une isolation thermique via un moyen d'ancrage, les tubes étant solidarisés aux caissons par un moyen de connexion démontable et flottant, c'est-à-dire permettant la dilatation thermique des tubes et de la partie de leur support soumise à la haute température tant dans la direction longitudinale des tubes que dans les directions transversales à celle-ci, caractérisé en ce que chaque tube est pourvu de plusieurs oeillets soudés, répartis sur la hauteur du tube, aptes, sous l'effet de la dilatation thermique axiale du tube, à coulisser dans une clé, elle-même fixée au caisson au travers de l'isolation thermique par des tirants de support, de sorte que le mouvement des tubes sous l'effet de la dilatation, essentiellement selon leur direction longitudinale et selon le plan du panneau soit réalisé en dehors de l'isolation thermique. Ainsi, c'est la structure de supportage qui permet la dilatation du panneau récepteur sans aucun mouvement au travers de ou dans l'isolant.

Selon des formes d'exécution préférées de l'invention, le récepteur solaire comporte en outre au moins une des caractéristiques suivantes, ou encore une combinaison appropriée de celles-ci :
- les caissons métalliques sont monoblocs et constitués d'une tôle rectangulaire repliée en « U » sur chacun de ses côtés, les coins de chaque caisson étant soudés ;
- l'isolation thermique est un bloc de section rectangulaire correspondant à celle des caissons et comportant sur chacun de ses côtés une chicane mâle ou femelle de manière à pouvoir être assemblé avec un bloc d'isolation adjacent comportant sur ses côtés des chicanes complémentaires ;
- les différents caissons avec leur isolation thermique sont assemblés avec un léger jeu facilitant leur démontage, un moyen d'étanchéité amovible étant pourvu entre les caissons pour assurer l'étanchéité au vent ;
- le moyen d'étanchéité amovible comporte un joint monté écrasé par boulonnage d'une part entre les brides constituées par les extrémités en « U » de deux caissons adjacents et d'autre part une contre-bride ou un profilé « H » ;
- la clé est munie de deux ergots diamétralement opposés aptes à coopérer avec deux creux réalisés dans chaque tirant, de manière à pouvoir bloquer la clé par rotation d'un quart de tour, une fine tôle repliée étant pourvue pour empêcher la rotation de la clé sur elle-même ;
- un cavalier légèrement replié apte à être monté sur deux clés adjacentes est pourvu pour assurer le blocage desdites clés ;
- les oeillets soudés sur le tube ont une embase en selle de cheval ;
- les tubes sont reliés entre eux via leurs clés correspondantes par des plaques latérales de supportage intermédiaire qui assurent la jonction entre les tirants et les tubes ;
- les tirants sont reliés aux plaques de supportage au moyen d'axes qui s'insèrent dans des trous oblongs des tirants.

### Brève description des figures

La figure 1 représente une vue schématique en coupe d'un caisson individuel constitutif du casing modulaire selon la présente invention.
La figure 2 représente une vue schématique en coupe de plusieurs caissons (en l'occurrence trois) selon la figure 1, assemblés entre eux avec un léger jeu et des moyens de connexion entre les caissons assurant l'étanchéité au vent.
La figure 3 représente, selon une vue schématique en coupe, plusieurs modes d'exécution du caisson selon la figure 1 avec un chicanage mâle ou femelle de l'isolation thermique ancrée sur la tôle, sur l'un ou l'autre côté (sur le dessin : côté haut et côté bas).
La figure 4 représente une vue en élévation du dispositif de fixation d'un tube individuel à un caisson, comprenant des tirants et une clé, ainsi qu'un oeillet soudé sur le tube, selon une modalité d'exécution de la présente invention.
La figure 5 représente une vue de détail de la clé de la figure 4 avec une première solution de blocage de la clé au niveau des tirants.
La figure 6 représente une vue de détail de la clé de la figure 4 avec une seconde solution de blocage de la clé au niveau des tirants.
La figure 7 représente une vue en plan d'une forme d'exécution particulière de l'oeillet soudé sur le tube comme à la figure 4.
La figure 8 représente une vue en perspective de l'ensemble d'un panneau de récepteur solaire comprenant plusieurs caissons modulaires selon l'invention, vu de l'arrière, c'est-à-dire du côté froid.
La figure 9 représente une vue de détail du système mécanique de soutien des tubes solaires, selon l'invention, assurant son maintien et son guidage et la reprise des efforts au vent.

### Description d'une forme d'exécution préférée de l'invention

La solution technique particulière proposée par la présente invention réalise non seulement les fonctions demandées dans les buts de l'invention mais cela également dans une configuration démontable facilement par l'arrière, c'est-à-dire depuis l'intérieur de la tour, accessible au personnel de maintenance, par éléments modulaires manipulables aisément par le personnel de montage. Il s'ensuit un accès aisé à l'arrière des tubes et donc la possibilité d'une inspection et d'une maintenance des tubes, qui constituent la partie la plus sollicitée du récepteur solaire.

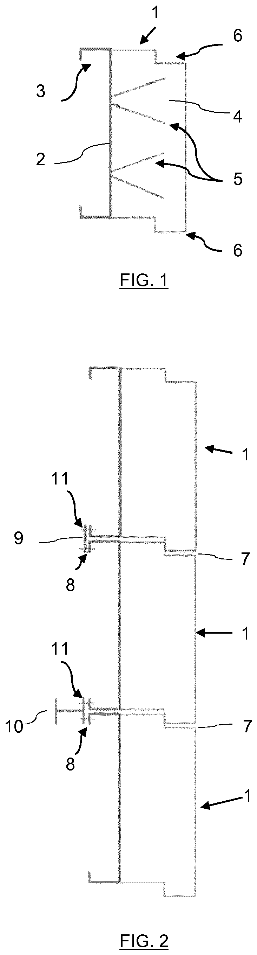

La figure 1 montre un caisson 1 du casing modulaire subdivisé en une pluralité de caissons 1 d'une taille préférée d'environ 1 à 2 m². Chaque caisson 1 est constitué d'une tôle 2 repliée en « U » 3 sur chacun de ses quatre cotés. Les coins de chaque caisson sont soudés, formant un assemblage rigide (non représenté).

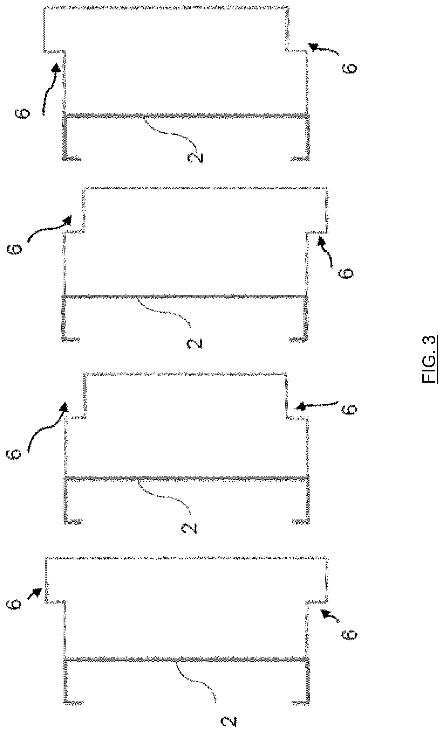

Une isolation thermique spécifique 4 est ancrée sur la tôle 2, coté haute température, grâce à un système d'ancrage 5 connu de l'homme de métier. Des chicanes 6 sont aménagées dans l'isolation 4 afin d'assurer une bonne barrière thermique entre les caissons 1 adjacents, en évitant les fuites de rayonnement solaire au travers des panneaux. Suivant la localisation du caisson 1 dans l'assemblage du récepteur solaire, le chicanage 6 sera mâle et/ou femelle sur l'un ou l'autre côté, comme représenté à la figure 3.

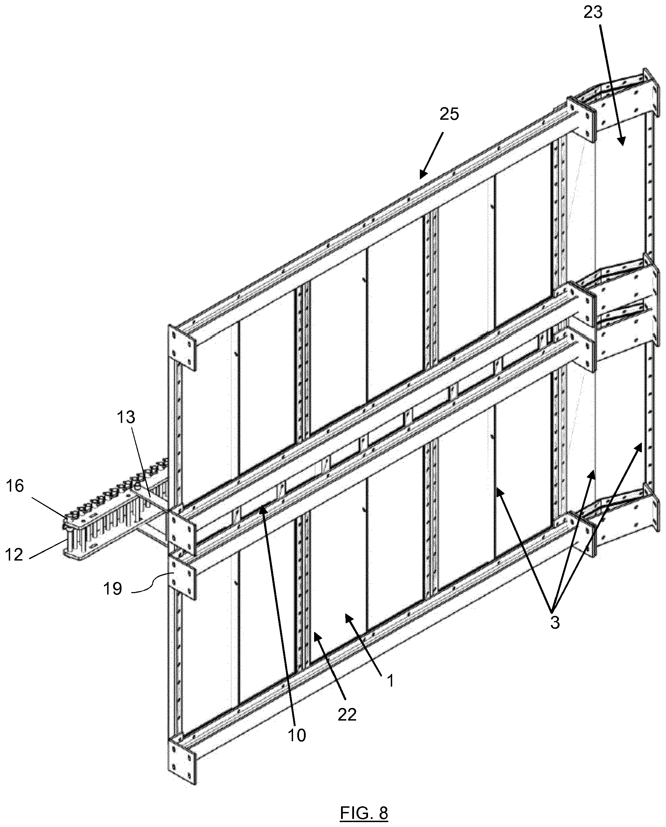

Comme représenté à la figure 2, les caissons 1 sont alors assemblés entre eux avec un léger jeu 7 et l'étanchéité au vent est assurée soit par un joint 8 et une contre-bride 9, soit par un joint 8 et un profilé « H » 10. Dans ce dernier cas, le profilé « H » 10 reprendra les charges de vent et de séisme et retransmettra ces efforts à la charpente principale (comme par exemple sur la figure 8). La contre-bride 9 ou le profilé « H » 10 sont assemblés par un moyen d'assemblage démontable, de préférence assemblés grâce à un boulonnage 11, sur des brides correspondantes pré-percées du caisson, en écrasant le joint d'étanchéité 8. Le jeu de montage 7 entre les caissons permet en outre un démontage aisé.

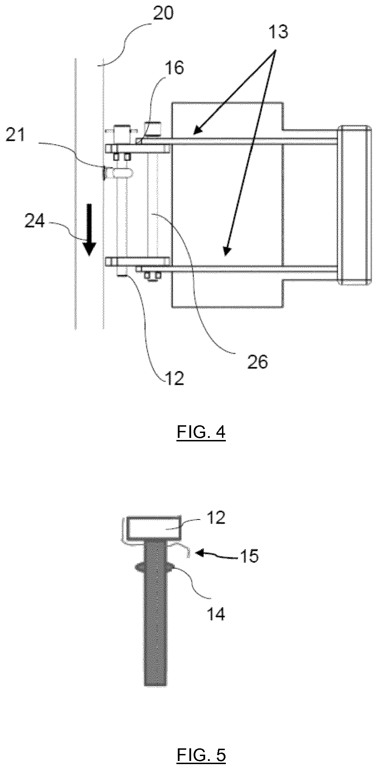

Comme représenté à la figure 4, la transmission des efforts de vent et de séisme agissant sur les tubes 20 vers la tôlerie 2 du casing 1 et les profilés « H » 10 est réalisée pas un oeillet 21 soudé sur le tube 20 et coulissant le long d'une clé 12, autorisant la dilatation thermique axiale du tube 20 mais tout en limitant ses déplacements latéraux. Tous les tubes 20 sont supportés individuellement.

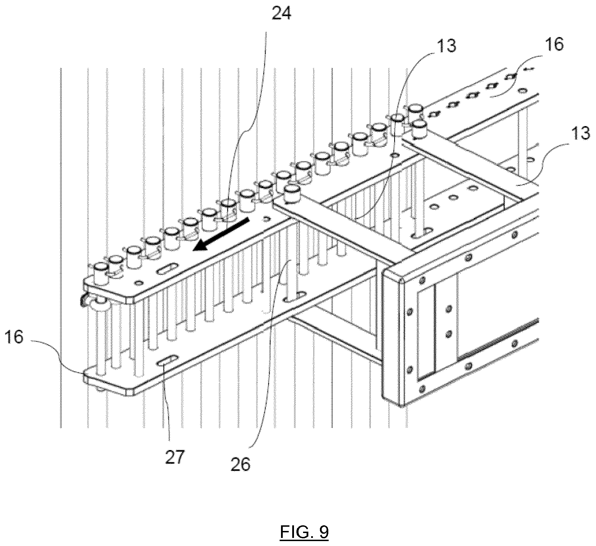

Comme représenté également sur la figure 4, chaque clé 12 est maintenue au casing 1, 2 par deux tirants 13 réalisés de préférence sous forme de plats. Grâce à deux ergots 14 aménagés sur la clé 12, et deux creux réalisés dans le tirant 13 (non représentés), la clé 12 sera maintenue en place, même en cas d'effort vertical dirigé vers le haut, en tournant cette dernière d'un quart de tour. Une fine tôle repliée 15 empêchera la rotation de la clé 12 pour ne pas que les ergots se retrouvent en face des creux de montage (voir figure 5). D'autres détails de la liaison sont représentés à la figure 9 (voir ci-après).

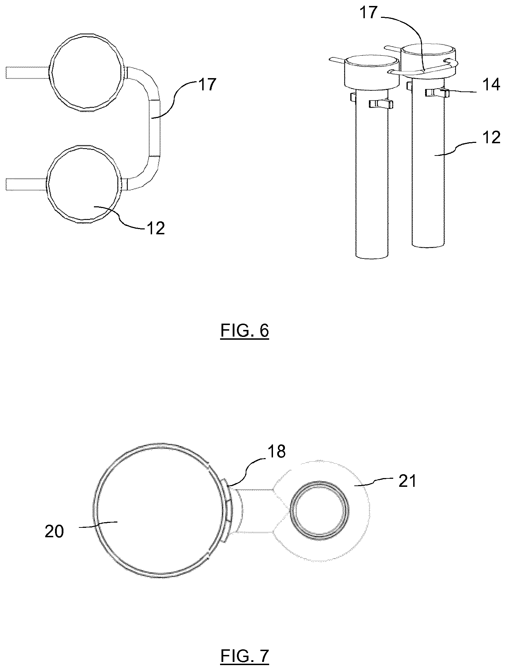

Comme représenté sur la figure 6, une autre solution de blocage de la clé 12 consiste en l'utilisation d'un cavalier 17 monté sur deux clés 12 consécutives ou adjacentes et légèrement replié afin de le maintenir en place.

Comme représenté sur la figure 7, l'oeillet 11 soudé sur le tube 20 aura également avantageusement une forme particulière avec une embase en selle de cheval 18, permettant un soudage facile sur le tube tout en distribuant mieux les efforts sur le tube, minimisant ainsi les contraintes.

La figure 8 montre une forme d'exécution réaliste pour l'ensemble du casing d'un panneau 25 vu de l'arrière, et notamment avec deux séries horizontales de caissons 1 assemblés avec des profilés « H » horizontaux 10 d'étanchéité au vent et des poutres 19 qui assurent la reprise des efforts au vent. On a également représenté sur la figure 8 un caisson de coin 23. Tout comme les panneaux, le caisson de coin 23 est boulonné sur les poutres de vent 19. L'isolation thermique n'est pas représentée.

Comme représenté sur les figures 4 et 9, les plats 13 en eux-mêmes sont retenus par le casing 1, 2 en formant un assemblage flottant, qui autorise les plats 13 à se dilater sur leurs longueurs, ceux-ci étant soumis également à une température élevée du côté externe. La figure 9 montre également que tous les tubes 20 et donc les clés 12 associées sont avantageusement relié(e)s latéralement par des plaques métalliques de supportage 16 qui assurent la jonction entre les tubes 20 et les plats de support 13. Avantageusement encore deux plats 13 sont reliés à deux plaques de supportage 16 au moyen d'axes 26 qui s'insèrent dans des trous oblongs 27 des plats 13, ce qui permet la dilatation horizontale des panneaux 25.

### Avantages de l'invention

Selon l'invention, les panneaux de tubes peuvent se déplacer verticalement mais aussi horizontalement sous l'effet de la dilatation thermique. Ainsi, les plaques de supportage 16 permettent de reprendre la dilatation horizontale des tubes, en se dilatant avec les tubes, puisque ces plaques 16 sont également soumises à la haute température. En outre les connexions par tiges et trous oblongs des plats 13 et des plaques de supportage 16 facilitent également la dilatation horizontale des panneaux.

La conception du système permet un montage indépendant des tubes, ce qui facilite leur maintenance et/ou leur remplacement. Le soudage des tubes aux oeillets par selle de cheval permet de répartir les efforts sur le tube, de préférence avec une épaisseur du bord de la selle de cheval du même ordre de grandeur que l'épaisseur du tube.

Un autre avantage de l'invention est que cette dilatation des tubes et de leur structure directe de support, et le mouvement qui en résulte, s'effectue en grande partie en dehors de l'isolant (contrairement au système de biellettes décrit dans WO 2010/048578 par exemple).

Enfin, les différents caissons modulaires peuvent être revêtus de leur isolation soit en usine, soit sur le site de montage. Les caissons sont dimensionnés pour pouvoir être manipulés par deux personnes, le cas échéant équipées d'outils de manutention adéquats (poids maximal de 150 kg environ).

### Symboles de référence

1. caisson
2. tôle
3. repli en « U » de la tôle (bride)
4. isolation thermique
5. ancrage
6. chicane
7. jeu entre caissons adjacents
8. joint
9. contre-bride
10. profilé « H »
11. boulon
12. clé amovible
13. tirant de support (plat)
14. ergot
15. tôle repliée anti-rotation
16. plaque latérale intermédiaire
17. cavalier
18. embase en selle de cheval
19. poutre de vent
20.tube échangeur
21. oeillet soudé sur tube
22. raidisseur
23. caisson de coin
24. déplacement des tubes par dilatation
25. panneau de tubes échangeurs
26. axe de liaison
27. trou oblong

## Revendications

1. Récepteur solaire externe pour tour d'une centrale solaire thermodynamique à concentration de type à tour et champ d'héliostats, ladite tour comprenant une structure interne modulaire étanche au vent, également appelée « casing » et une pluralité de panneaux récepteurs (25) à tubes échangeurs de chaleur (20) fixés à cette structure interne, chaque panneau (25) comprenant une pluralité de caissons métalliques (1) supportant les tubes échangeurs de chaleur (20) et assemblés entre eux par un moyen d'assemblage permettant le démontage, chaque caisson (1) étant recouvert d'une isolation thermique (4) via un moyen d'ancrage (5), les tubes (20) étant solidarisés aux caissons (1) par un moyen de connexion démontable et flottant, c'est-à-dire permettant la dilatation thermique des tubes (20) et de la partie de leur support soumise à la haute température tant dans la direction longitudinale des tubes que dans les directions transversales à celle-ci, **caractérisé en ce que** chaque tube (20) est pourvu de plusieurs oeillets soudés (21), répartis sur la hauteur du tube (20), aptes, sous l'effet de la dilatation thermique axiale du tube (20), à coulisser dans une clé (12), elle-même fixée au caisson (1) au travers de l'isolation thermique (4) par des tirants de support (13), de sorte que le mouvement des tubes (20) sous l'effet de la dilatation, essentiellement selon leur direction longitudinale et selon le plan du panneau (25), soit réalisé en dehors de l'isolation thermique (4).

2. Récepteur solaire selon la revendication 1, **caractérisé en ce que** les caissons métalliques (1) sont monoblocs et constitués d'une tôle rectangulaire repliée en « U » (3) sur chacun de ses côtés, les coins de chaque caisson (1) étant soudés.

3. Récepteur solaire selon la revendication 1, **caractérisé en ce que** l'isolation thermique (4) est un bloc de section rectangulaire correspondant à celle des caissons (1) et comportant sur chacun de ses côtés une chicane (6) mâle ou femelle de manière à pouvoir être assemblé avec un bloc d'isolation adjacent comportant sur ses côtés des chicanes (6) complémentaires.

4. Récepteur solaire selon la revendication 1, **caractérisé en ce que** les différents caissons (1) avec leur isolation thermique (4) sont assemblés avec un léger jeu (7) facilitant leur démontage, un moyen d'étanchéité amovible étant pourvu entre les caissons (1) pour assurer l'étanchéité au vent.

5. Récepteur solaire selon la revendication 4, **caractérisé en ce que** le moyen d'étanchéité amovible comporte un joint (8) monté écrasé par boulonnage (11) d'une part entre les brides constituées par les extrémités en « U » (3) de deux caissons adjacents et d'autre part une contre-bride (9) ou un profilé « H » (10).

6. Récepteur solaire selon la revendication 1, **caractérisé en ce que** la clé (12) est munie de deux ergots (14) diamétralement opposés aptes à coopérer avec deux creux réalisés dans chaque tirant (13), de manière à pouvoir bloquer la clé par rotation d'un quart de tour, une fine tôle repliée (15) étant pourvue pour empêcher la rotation de la clé (12) sur elle-même.

7. Récepteur solaire selon la revendication 1, **caractérisé en ce qu'**un cavalier légèrement replié (17) apte à être monté sur deux clés adjacentes (12) est pourvu pour assurer le blocage desdites clés (12).

8. Récepteur solaire selon la revendication 6, **caractérisé en ce que** les oeillets (21) soudés sur le tube (20) ont une embase en selle de cheval (18).

9. Récepteur solaire selon la revendication 1, **caractérisé en ce que** les tubes (20) sont reliés entre eux via leurs clés correspondantes (12) par des plaques latérales de supportage intermédiaire (16) qui assurent la jonction entre les tirants (13) et les tubes (20).

10. Récepteur selon la revendication 9, **caractérisé en ce que** les tirants (13) sont reliés aux plaques de supportage (16) au moyen d'axes (26) qui s'insèrent dans des trous oblongs des tirants (13).

## Patentansprüche

1. Externer Solarempfänger für den Turm eines Solarwärmekraftwerks vom Typ Turm und Heliostatenfeld, wobei der Turm eine winddichte modulare interne Struktur umfasst, auch als "casing" bezeichnet, und eine Vielzahl von Empfängerplatten (25) mit Wärmetauscherrohren (20), die an diese interne Struktur fixiert sind, wobei jede Platte (25) eine Vielzahl von Metallboxen (1) umfasst, die die Wärmetauscherrohre (20) tragen und untereinander durch ein Montagemittel montiert sind, das die Demontage ermöglicht, wobei jede Box (1) mit einer thermischen Isolierung (4) mit Hilfe eines Verankerungsmittels (5) bedeckt ist, wobei die Rohre (20) mit den Boxen (1) durch ein demontierbares und schwimmendes Verbindungsmittel fest verbunden sind, d. h. das die thermische Ausdehnung der Rohre (20) und des Teils ihres Trägers, der der hohen Temperatur ausgesetzt ist, sowohl in der Längsrichtung der Rohre als auch in den Querrichtungen dieser ermöglicht, **dadurch gekennzeichnet, dass** jedes Rohr (20) mit mehreren geschweißten Ösen (21) versehen ist, die auf der Höhe des Rohrs (20) verteilt sind, die, unter der Einwirkung der axialen thermischen Ausdehnung des Rohrs (20), ausgelegt sind, in einem Schlüssel (12), der selbst an die Box (1) fixiert ist, über die thermische Isolierung (4) durch Tragzugstangen (13) zu gleiten, so dass die Bewegung der Rohre (20) unter der Einwirkung der Ausdehnung im Wesentlichen gemäß ihrer Längsrichtung und gemäß der Ebene der Platte (25) außerhalb der thermischen Isolierung (4) durchgeführt wird.

2. Solarempfänger nach Anspruch 1, **dadurch gekennzeichnet, dass** die Metellboxen (1) einstückig sind und aus einem rechtwinkligen Blech bestehen, das auf jeder seiner Seiten "U"-förmig (3) umgeschlagen ist, wobei die Ecken jeder Box (1) geschweißt sind.

3. Solarempfänger nach Anspruch 1, **dadurch gekennzeichnet, dass** die thermische Isolierung (4) ein Block mit rechtwinkligem Schnitt ist, der demjenigen der Boxen (1) entspricht und umfassend auf jeder seiner Seiten eine Außen- oder Innenleitblech (6), um mit einem benachbarten Isolationsblock montiert werden zu können, der auf seinen Seiten komplementäre Leitbbleche (6) umfasst.

4. Solarempfänger nach Anspruch 1, **dadurch gekennzeichnet, dass** die verschiedenen Boxen (1) mit ihrer thermischen Isolierung (4) mit einem geringfügigen Spiel (7) montiert sind, das ihre Demontage erleichtert, wobei ein entfernbares Dichtungsmittel zwischen den Boxen (1) vorgesehen ist, um die Winddichtigkeit sicherzustellen.

5. Solarempfänger nach Anspruch 4, **dadurch gekennzeichnet, dass** das entfernbare Dichtungsmittel eine Dichtung (8) umfasst, die zerdrückt durch Verschraubung (11) einerseits zwischen den Flanschen, die aus den "U"-förmigen Enden (3) von zwei benachbarten Boxen bestehen, und andererseits durch einen Gegenflansch (9) oder ein "H"-Profil (10) montiert ist.

6. Solarempfänger nach Anspruch 1, **dadurch gekennzeichnet, dass** der Schlüssel (12) mit zwei diametral entgegengesetzten Zapfen (14) ausgestattet ist, die ausgelegt sind, um mit zwei Hohlräumen zusammenzuarbeiten, die in jeder Zugstange (13) ausgeführt sind, um den Schlüssel durch Rotation um eine viertel Drehung blockieren zu können, wobei ein dünnes umgeschlagenes Blech (15) vorgesehen ist, um die Rotation des Schlüssels (12) um sich selbst zu verhindern.

7. Solarempfänger nach Anspruch 1, **dadurch gekennzeichnet, dass** eine geringfügig umgeschlagene Klammer (17), die ausgelegt ist, um auf zwei benachbarten Schlüsseln (12) montiert zu sein, vorgesehen ist, um die Blockierung der Schlüssel (12) sicherzustellen.

8. Solarempfänger nach Anspruch 6, **dadurch gekennzeichnet, dass** die Ösen (21), die auf das Rohr (20) geschweißt sind, eine Basis in Form eines Pferdesattels (18) aufweisen.

9. Solarempfänger nach Anspruch 1, **dadurch gekennzeichnet, dass** die Rohre (20) untereinander mit Hilfe ihrer entsprechenden Schlüssel (12) durch seitliche Zwischentrageplatten (16) verbunden sind, die die Verbindung zwischen den Zugstangen (13) und den Rohren (20) sicherstellen.

10. Solarempfänger nach Anspruch 9, **dadurch gekennzeichnet, dass** die Zugstangen (13) mit den Trageplatten (16) mit Hilfe von Achsen (26) verbunden sind, die in längliche Löcher der Zugstangen (13) eingeführt werden.

## Claims

1. An external solar receiver for a concentrating thermodynamic solar power plant of the type with a tower and heliostat field, said tower comprising a wind tight modular inner structure, also called "casing", and a plurality of heat exchanger tube (20) receiver panels (25) fastened to that inner structure, each panel (25) comprising a plurality of metal boxes (1) supporting the heat exchanger tubes (20) and assembled to one another by assembly means allowing the disassembly, each box (1) being covered with thermal insulation (4) via an anchoring means (5), the tubes (20) being secured to the boxes (1) by a removable and floating connecting means, i.e., allowing the thermal expansion of the tubes (20) and of the part of their support subject to the high temperature both in the longitudinal direction of the tubes and in the transverse directions thereto, **characterized in that** each tube (20) is provided with several welded eyelets (21), distributed over the height of the tube (20), able, under the effect of the axial thermal expansion of the tube (20), to slide in a key (12), which in turn is fastened to the box (1) through the thermal insulation (4) by support bars (13), so that the movement of the tubes (20) under the effect of the expansion, essentially in the longitudinal direction and along the plane of the panel (25), is done outside the thermal insulation (4).

2. The solar receiver according to claim 1, **characterized in that** the metal boxes (1) are in a single piece and made up of a rectangular metal sheet bent in a "U" shape (3) on each of its sides, the corners of each box (1) being welded.

3. The solar receiver according to claim 1, **characterized in that** the thermal insulation (4) is a block with a rectangular section corresponding to that of the boxes (1) and including, on each of its sides, a male or female baffle (6) so as to be able to be assembled with an adjacent insulation block including additional baffles (6) on its sides.

4. The solar receiver according to claim 1, **characterized in that** the different boxes (1) with the thermal insulation (4) are assembled with slight play (7) facilitating their disassembly, a removable sealing means being provided between the boxes (1) to ensure wind tightness.

5. The solar receiver according to claim 4, **characterized in that** the removable sealing means includes a seal (8) mounted crushed by bolting (11) on the one hand between the flanges formed by the U-shaped ends (3) of two adjacent boxes and on the other hand a companion flange (9) or an H-shaped profile (10).

6. The solar receiver according to claim 1, **characterized in that** the key (12) is provided with two diametrically opposite lugs (14) able to cooperate with two hollows formed in each bar (13), so as to be able to lock the key by rotation by a quarter revolution, a thin bent metal sheet (15) being provided to prevent rotation of the key (12) around itself.

7. The solar receiver according to claim 1, **characterized in that** a slightly bent staple (17) able to be mounted on two adjacent keys (12) is provided to ensure the locking of said keys (12).

8. The solar receiver according to claim 6, **characterized in that** the eyelets (21) welded on the tube (20) have a saddle-shaped base (18).

9. The solar receiver according to claim 1, **characterized in that** the tubes (20) are connected to one another via their corresponding keys (12) by lateral intermediate support plates (16) that provide the junction between the bars (13) and the tubes (20).

10. The receiver according to claim 9, **characterized in that** the bars (13) are connected to the support plates (16) using axes (26) that are inserted into oblong holes of the bars (13).
